Europäisches Patentamt

European Patent Office

Office européen des brevets

(19)

(11) **EP 0 866 390 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(51) Int Cl.⁷: **G05B 19/401**, G01B 21/04

(21) Anmeldenummer: **98103091.9**

(22) Anmeldetag: **21.02.1998**

(54) **Verfahren zur Steuerung von Koordinatenmessgeräten nach Solldaten**

Control method for a coordinate measuring machine in accordance with reference data

Procédé de commande d'un appareil de mesure de coordonnées suivant les données de consigne

(84) Benannte Vertragsstaaten:
**DE FR GB IT**

(30) Priorität: **21.03.1997 DE 19712029**

(43) Veröffentlichungstag der Anmeldung:
**23.09.1998 Patentblatt 1998/39**

(73) Patentinhaber:
• **Carl Zeiss**
**89518 Heidenheim (Brenz) (DE)**
Benannte Vertragsstaaten:
**DE FR IT**
• **Carl-Zeiss-Stiftung trading as Carl Zeiss**
**89518 Heidenheim (Brenz) (DE)**
Benannte Vertragsstaaten:
**GB**

(72) Erfinder:
• **Peter, Heinz**
**89079 Ulm (DE)**
• **Staaden, Ulrich**
**73431 Aalen (DE)**

(56) Entgegenhaltungen:
EP-A- 0 762 247       EP-A- 0 762 250
EP-B- 0 344 304       US-A- 5 020 001
US-A- 5 461 797

• **KASAGAMI F: "COORDINATED MOTION OF ARC WELDING ROBOTS USING PARALLEL DATA PROCESSOR" 9.November 1992 , ROBOTICS, CIM AND AUTOMATION, EMERGING TECHNOLOGIES, SAN DIEGO, NOV. 9 - 13, 1992, VOL. VOL. 2, NR. CONF. 18, PAGE(S) 656 - 663 , INSTITUTE OF ELECTRICAL AND ELECTRONICS ENGINEERS XP000356712 * das ganze Dokument ***

**Beschreibung**

Die Erfindung betrifft ein Verfahren zur Steuerung von Koordinatenmeßgeräten nach Solldaten mit einem beweglich gelagerten Tastkopf, der in einem kontinuierlich über die Oberfläche eines zu vermessenden Werkstückes geführten Abtastpunkt mit einer Vorzugsmeßrichtung mißt, wobei zumindest der Tastkopf und/ oder das Werkstück zusätzlich um mindestens eine Drehachse drehbar gelagert ist.

Derartige Verfahren sind aus dem Stand der Technik bereits in großer Variationsbreite bekannt und werden vornehmlich bei Verzahnungsmeßgeräten eingesetzt, mit denen die Evolventenprofile der Zahnflanken von zu vermessenden Zahnrädern gemessen werden können.

Die US 4,852,402 zeigt beispielsweise ein solches Verfahren zum vermessen der Evolventenverzahung eines Zahnrades. Hierzu wird das zu vermessende Zahnrad auf einer Dreheinheit angeordnet, die das zu vermessende Zahnrad dreht. Weiterhin wird ein in einer Meßachse messender Taster von einer Mimik derart an den Zahnflanken des Zahnrades vorbeigeführt, sodaß der Taster die zu vermessende Zahnflanke des rotierenden Zahnrades abfährt und dabei die Zahnflanke immer in ein und derselben Vorzugsmeßrichtung abtastet. Um immer die Vorzugsmeßrichtung einzuhalten wird der Taster von der Mimik auf einer Tangente an den Grundkreis des Zahnrades geführt. Hierbei wird die mathematische Definition der Evolvente ausgenutzt, nämlich daß die Evolvente immer lotrecht auf eine Tangente an den Grundkreis des Zahnrades stehen muß.

Ein Verzahnungsmeßgerät, mit dem ein ähnliches Verfahren durchgeführt werden kann, ist in der EP 0 131 537 B1 beschrieben. Das hierin beschriebene Verzahnungsmeßgerät unterscheidet sich u.a. darin von dem der US 4,852,402, daß der Taster zusätzlich noch eine Drehachse aufweist, um die dieser beim Abtasten der Zahnflanken gedreht wird, wobei der Taster hierbei derart geführt wird, daß die Meßachse des Tasters und damit die Vorzugsmeßrichtung des Tasters stets normal zum Evolventenprofil geführt ist. Zur Steuerung der Dreheinheit des Werkstückes sowie der Dreheinheit des Tasters und der Mimik des Tasters wird hierbei ebenfalls die mathematische Eigenschaft der Evolvente ausgenutzt, daß diese in jedem Punkt senkrecht auf eine Tangente an den Grundkreis des Zahnrades steht.

Die CH 617 264 A5 zeigt einen beweglich geführten Taster mit einer Meßachse, mit dem die Oberfläche von zu vermessenden Werkstücken abgetastet werden kann. Der Taster weist eine Mechanik auf, über die die Meßachse des Profilmeßtasters verstellt werden kann. Zur Vermessung eines Werkstückes wird der Taster von einer numerischen Steuerung derart geführt, daß der Taster auf einer vorgegebenen Bahn am Werkstück vorbeibewegt wird, wobei gleichzeitig die Meßachse derart verstellt wird, daß der Taster im Abtastpunkt jeweils immer eine definierte Vorzugsmeßrichtung auf die Werkstückoberfläche aufweist. Über die Erzeugung der Steuerdaten ist in der betreffenden Patentschrift nichts beschrieben.

Die Besonderheit der beschriebenen Verfahren bzw. Vorrichtungen ist darin zu sehen, daß beim Abtasten von Werkstücken eine festgelegte Vorzugsmeßrichtung, mit der der Taster das Werkstück abtastet, nur über komplexe mathematische Einzellösungen realisiert werden konnte. Dies gilt gleichfalls für die in der CH 617 264 A5 gezeigte Lösung. Obwohl hierin vollkommen offen bleibt, wie konkret die Steuerdaten für das entsprechende Koordinatenmeßgerät erzeugt werden, muß auch hierbei davon ausgegangen werden, daß entweder mathematische Einzellösungen verwendet werden, ähnlich denen der EP 0 131 537 B1 oder der US 4,852,402, oder die Steuerdaten am "Reißbrett" entstanden sind.

Es soll an dieser Stelle eine Definition des Begriffes Vorzugsmeßrichtung vorgenommen werden. Unter Vorzugsmeßrichtung soll im folgenden die Richtung verstanden werden, in die der Taster vorzugsweise bei Abweichungen des Werkstückes von seiner Sollkontur ausgelenkt wird. Bei einachsigen Tastern ist diese Richtung durch die eine Meßachse festgelegt, in die der Taster nur ausgelenkt werden kann. Bei mehrachsigen Tastern, deren Taststift in wenigstens zwei aufeinander senkrecht stehenden Richtungen ausgelenkt werden kann, wird die Vorzugsmeßrichtung durch die Meßkraft definiert, mit der der Taststift auf die Werkstückoberfläche gepreßt wird. Im Falle eines optischen Tasters mit einem Abtaststrahl entspricht die Vorzugsmeßrichtung der Richtung des Abtaststrahls.

Neben den eingangs beschriebenen Verfahren sind aus der EP 0 762 250 A1 und der EP 0 762 247 A1 Verfahren bekannt, bei denen aus einer vorgegebenen abzutastenden Geometrie automatisiert in der Steuerung eines Koordinatenmeßgerätes Bahndaten zum Verfahren eines Tastkopfes über eine Mechanik in den drei Koordinatenrichtungen x,y,z erzeugt werden. Neben den Bahndaten werden zusätzlich Daten für Messkraftgeneratoren im Tastkopf erzeugt, über die auf den hieran beweglich befestigten Taststift Messkräfte in den Koordinatenrichtungen x,y,z erzeugt werden können. Die hierin gezeigten Verfahren lassen sowohl für den Tastkopf, wie auch für den Taststift nur Linearbewegungen in den Koordinatenrichtungen zu.

Die US 5,020,001 zeigt einen Roboterarm mit mehreren Drehgelenken, der ein Werkstück relativ zu einer Werkstückbearbeitungseinheit bewegt. Zur Erstellung eines Bearbeitungsablaufes bringt der Werker ein zu bearbeitendes Werkstück in eine Vielzahl von Bearbeitungspositionen, wobei in jeder Bearbeitungsposition die Drehstellungen der Drehgelenke aufgezeichnet werden. Nachdem alle Bearbeitungspositionen aufgezeichnet sind, wird dann über Interpolation zwischen den so aufgezeichneten Drehstellungen Zwischenstellungen eingefügt, über die sich eine gewünschte Bearbeitungsgeschwindigkeit einstellen lässt.

Aufgabe der vorliegenden Erfindung ist es ein Verfahren o.g. Art sowie ein entsprechendes Koordinatenmeßgerät zur Durchführung des Verfahrens anzugeben, mit dem automatisch beliebige Konturen vermessen werden können.

Die Aufgabe wird gemäß den Merkmalen der Ansprüche 1 und 12 gelöst.

Der Grundgedanke des erfindungsgemäßen Verfahrens ist darin zu sehen, daß auf Basis von Geometriedaten, die zumindest Punkte der Oberfläche des zu vermessenden Werkstückes umfassen, die die durch den Taster abzutastende Linie auf der Werkstückoberfläche definieren, Steuerdaten zur Steuerung des Meßablaufes derart generiert werden, daß zur Vermessung des Werkstückes unter anderem das Werkstück und/oder der Taster um die Drehachse gedreht werden.

Das erfindungsgemäße Verfahren, das durch die Unteransprüche weitergebildet wird, weist gegenüber dem herkömmlichen Stand der Technik folgende besonderen Vorteile auf. So kann mit dem erfindungsgemäßen Verfahren eine beliebige Linie eines zu vermessenden Werkstückes unter Zuhilfenahme mindestens einer Dreheinheit vermessen werden, ohne hierzu für unterschiedliche Konturen unterschiedliche Einzellösungen suchen bzw. anfertigen zu müssen. Darüberhinaus können lückenlos die seitlichen Konturen eines Werkstückes vermessen werden, ohne hierzu einen Tasterwechsel vornehmen zu müssen.

Die Steuerdaten werden hierzu beim erfindungsgemäßen Verfahren derart ermittelt, daß die Projektion der Vorzugsmeßrichtung auf eine orthogonal zur Drehachse liegende Normalenebene mit der Projektion eines im Abtastpunkt normal auf die Werkstückoberfläche stehenden Normalenvektors auf besagte Normalenebene weitestgehend einen definierten Tastwinkel einschließt.

Hierdurch kann sichergestellt werden, daß der Taster in orthogonal zur Drehachse bzw. zu den Drehachsen liegender Ebene in jedem abgetasteten Punkt die gleichen Meßbedingungen vorfindet. Der besagte Tastwinkel sollte hierbei vorzugsweise 0° bzw. 180° aufweisen, da hierbei optimale Meßbedingungen vorliegen. Für einen einachsigen Taster bzw. für einen entsprechenden optischen Taster mit einem gegenüber dem Taster feststehenden Abtaststrahl bedeutet dies, daß die Meßachse immer zumindest in orthogonal auf die Drehachse stehender Richtung normal auf die Werkstückoberfläche zeigt. Für einen mehrachsigen Taster bedeutet dies, daß die eingestellte Meßkraft immer in orthogonal auf die Drehachse stehender Richtung normal auf die Werkstückoberfläche zeigt.

Der Tastwinkel wird hierbei für jeden Punkt durch geeignete Drehung des Tasters und/oder Drehung des Werkstückes eingestellt. Zur Berechnung der Steuerdaten wird dabei rein rechnerisch gemäß einer ersten Variante das Werkstück solange um die Drehachse rotiert, bis die Projektion des Normalenvektors des betreffenden Punktes auf der Normalenebene zur Projektion der richtungsmäßig feststehenden Vorzugsmeßrichtung auf der Normalebene den Tastwinkel einnimmt. In einer zweiten Variante wird der Taster solange rotiert, bis die Projektion der Vorzugsmeßrichtung gegenüber der in diesem Fall richtungsmäßig feststehenden Projektion des Normalenvektors in der Normalenebene den besagten Tastwinkel einnimmt. Natürlich kann gleichfalls in einer dritten Variante auch sowohl das Werkstück, wie auch der Taster gleichzeitig gedreht werden, bis der Tastwinkel übereinstimmt. Hierzu kann beispielsweise der Drehwinkel ermittelt werden, um den entweder das Werkstück allein gedreht werden müßte, um den Tastwinkel zu erreichen, wobei dann das Werkstück um die Hälfte des ermittelten Drehwinkels gedreht wird und der Taster entsprechend um die andere Hälfte des ermittelten Drehwinkels.

Zur Berechnung der entsprechenden Drehwinkel gibt es unterschiedliche Vorgehensweisen.

In einer sehr einfachen Version, können die Drehwinkel unmittelbar aus dem Winkel berechnet werden, den die die abzutastende Linie definierenden Punkte mit der Drehachse einschließen, um die das Werkstück gedreht wird. Das Verfahren ist jedoch nur sehr beschränkt einsatzfähig, da dieses Verfahren nur bei abzutastenden Linien angewendet werden kann, die in jedem abzutastenden Punkt zur Drehachse einen annähernd konstanten Abstand aufweisen. Beispielsweise kann diese Methode bei Kreiszylindern angewendet werden, deren Symmetrieachse genau auf der Drehachse plaziert ist.

Der Drehwinkel kann gleichfalls aus Normalenvektoren berechnet werden, die zu jedem definierenden Punkt der abzutastenden Linie eine normal auf die Werkstückoberfläche stehende Richtung angeben, wobei der Drehwinkel aus dem Winkel der in die besagte Normalenebene projizierten Normalenvektoren ermittelt wird. Die hierzu notwendigen Normalenvektoren sind bei Koordinatenmeßgeräten mit einem mehrachsigen Taster üblicherweise ebenfalls Bestandteil der Geometriedaten und werden an die Steuerung des Koordinatenmeßgeräts übergeben, um, wie weiter unten ausgeführt, die Meßkraft einzustellen, mit der die Tastkugel auf die Werkstückoberfläche gepreßt wird. Obwohl diese Methode nun nicht mehr an die Geometrie des Werkstückes gebunden ist, weist das bezeichnete Verfahren jedoch den Nachteil auf, daß die Normalenvektoren nur dann verwendet werden können, wenn sie nicht parallel zur Drehachse mit der besagten ersten Ausrichtung stehen. Soll beispielsweise die horizontale Oberseite eines auf einer Dreheinheit mit vertikaler Drehachse gelagerten Werkstückes vermessen werden, so zeigen die Normalenvektoren ebenfalls in vertikale Richtung, sodaß der Winkel zwischen den projizierten Normalenvektoren 0° ist.

In einer besonders Vorteilhaften Ausführungsform wird deshalb zwischen den die abzutastende Linie definierenden Punkten eine Abtastlinie ermittelt, wobei ferner zur Ermittlung der Drehwinkel in den die Abtastlinie definierenden Punkten Tangentenvektoren an die Abtastlinie ermittelt werden und aus den Winkeln zwischen den in die besagte Normalenebene projizierten Tangentenvektoren die Drehwinkel ermittelt werden. Hierdurch ergibt sich ein Verfahren, das weitestgehend unabhängig von der Geometrie des Werkstückes wie auch von der abzutastenden Linie ist.

Unter Berücksichtigung der so ermittelten Drehwinkel können nun über Vektorarithmetik Bahnpunkte ermittelt werden, die die durch den Taster abzufahrende Bahn definieren. Auf Basis der Bahnpunkte werden dann Lagesollwerte für die Steuerung des Tasters und auf Basis der zugehörigen Drehwinkel Drehwinkelsollwerte für die Steuerung der Drehwinkel der Dreheinheit bzw. der Dreheinheiten derart ermittelt, daß der Taster eine festgelegte Maximalbahngeschwindigkeit und eine festgelegte Maximalbahnbeschleunigung nicht überschreitet und daß die Dreheinheit eine festge-legte Maximalwinkelgeschwindigkeit und eine festge-legte Maximalwinkelbeschleunigung nicht überschrei-tet.

Das beschriebene Verfahren funktioniert problemlos in Fällen, in denen sich der Winkel der Normalenvektoren gegenüber den Drehachsen mit der besagten ersten Ausrichtung nicht ändert. Für den Fall jedoch, daß sich der besagte Winkel ändert, gibt es Probleme, da die Vorzugsmeßrichtung nur in orthogonal auf die Drehachse stehender Richtung mit der entsprechenden Komponente des Normalenvektors den festgelegten Tastwinkel einschließt. In paralleler Richtung würde sich hierdurch der Tastwinkel verändern. Um diesem Problem abzuhelfen, gibt es mehrere Möglichkeiten. Eine der Möglichkeiten besteht darin, einen mehrachsigen Taster zu verwenden, und die durch den Taster aufgeschaltete Meßkraft in Abhängigkeit von der Flächennormalen derart zu variieren, daß die Meßkraft immer senkrecht auf die Werkstückoberläche steht.

Eine bevorzugte Lösung des Problems ergibt sich jedoch, wenn der Taster um eine weitere Drehachse drehbar ist, die orthogonal zu der Drehachse mit besagter ersten Ausrichtung steht. Hierdurch kann der Taster gegenüber dem Werkstück jederzeit so verfahren werden, daß die Vorzugsmeßrichtung nicht nur in orthogonal zur Drehachse stehender Richtung den besagten Tastwinkel einschließt sondern auch räumlich einen festen Winkel zu den besagten Normalenvektoren steht. Die entsprechenden Drehwinkel, um die diese zusätzliche Dreheinheit gedreht werden muß, können vollkommen analog aus dem Winkel der Projektionen der oben beschriebenen Normalenvektoren oder besser nocht der oben beschriebenen Tangentenvektoren auf eine Normal zur weiteren Drehachse stehenden Normalenebene berechnet werden. Die Bahnpunkte können dann einfach über einfache Vektorarithmetik, analog wie unten beschrieben, bestimmt werden.

Weiterbildungen der Erfindung und weitere Vorteile ergeben sich aus den Figuren und der dazugehörigen Beschreibung. Hierin zeigen:

Figur 1      eine Prinzipskizze einer erfindungsgemäßen Steuereinrichtung, bei der das Werkstück durch eine Dreheinheit (25) rotiert werden kann;

Figur 2      beispielhafte Beschreibung des Meßablaufes für ein Werkstück (15) mit einer Steuerung gemäß Figur 1;

Figur 3      Vorgehen zur Erzeugung der Bahndaten für den Taster (2, 7, 40) und der dazugehörigen Drehwinkel für die Dreheinheit (25);

Figur 4a, b      Vorgehen zur Ermittlung der Lagesollwerte (Lai) für den Taster (2, 7, 40)und der Drehwinkelsollwerte (L$\alpha$i) für die Dreheinheit (25).

Figur 5      ein anderes Ausführungsbeispiel einer erfindungsgemäßen Steuerung, bei der der Tastkopf (2) um zumindest eine Drehachse (30) bewegt werden kann;

Figur 6      den Meßablauf bei der Vermessung eines Werkstückes (37) mit einer Steuerung gemäß Figur 5;

Figur 7      das Vorgehen zum Erzeugen der Lagesollwerte (Lbi) für den Taster (2, 7, 40) und der Drehwinkelsollwerte (L$\beta$i) für die Dreheinheit (35).

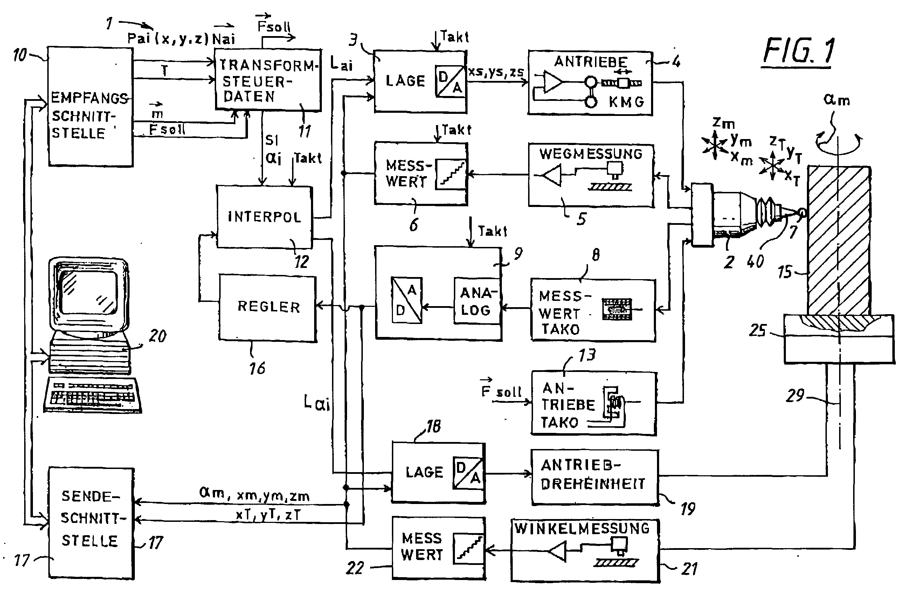

Figur 1 zeigt eine einfache Prinzipskizze der Steuerung (1) eines erfindungsgemäßen Koordinatenmeßgerätes, die einen Tastkopf (2) mit einem daran beweglich befestigten Taststift (40) mit einer Tastkugel (7) nach Solldaten gesteuert verfährt. Die Steuerung (1) verfährt weiterhin ein Werkstück (15), das auf einer um eine Drehachse (29) drehbar gelagerten Dreheinheit (25) gelagert ist nach Solldaten.

Die genaue Funktion des Koordinatenmeßgeräts soll nun im folgenden erläutert werden. Die Steuerung (1) des Koordinatenmeßgeräts ist über die Eingangsschnittstelle (10) und die Sendeschnittstelle (17) mit dem Auswerterechner (20) des Koordinatenmeßgeräts verbunden. Über die Eingangsschnittstelle (10) werden vom Rechner (20) u.a. folgende Daten an die Steuerung (1) übergeben:

a) die Transformationsmatrix (T) die die Lage des Werkstückkoordinatensystem (WKS) im Maschi-nenkoordinatensystem (MKS) des Koordinaten-meßgeräts beschreibt;

b) der Vektor (m) der die Ablage des Mittelpunkts der verwendeten Tastkugel (7) im Maschinenkoordinatensystem (MKS) von einem Bezugspunkt am Tastkopf (2) des Koordinatenmeßgeräts beschreibt;

c) der Betrag der Sollmeßkraft (Fsoll) die der Taststift (40) bzw. die daran befestigte Tastkugel (7) auf das abzutastende Werkstück (15) ausüben soll.

Außerdem werden über die Eingangsschnittstelle (10) die Informationen übergeben, die zur Beschreibung der von dem Taststift (40) bzw. der daran befestigten Tastkugel (7) abzufahrenden Sollkontur erforderlich sind. Das sind beispielsweise Punktefolgen (Pai (x, y, z)). Gleichzeitig können auch, soweit vorhanden, für die einzelne Punkte (Pai (x, y, z)) jeweils zugeordnete Normalenvektoren ($\vec{N}i$) übergeben werden, die die normale Richtung auf die Oberfläche des zu vermessenden Werkstückes (15) an den betreffenden Punkten beschreiben.

Das wichtigste Bauelement der Steuerung sind ein oder mehrere Mikroprozessoren. Demzufolge sind einige der in Figur 1 bezeichneten Funktionsbaugruppen nicht in Hardware realisiert sondern Teil der Firmware dieser Mikroprozessoren. Das gilt beispielsweise auch für die auf die Eingangsschnittstelle (10) folgende Funktionsbaugruppe (11) "Transformation Steuerdaten". Die Funktionsbaugruppe (11) "Transformation Steuerdaten" berechnet aus den erhaltenen Informationen die Bahndaten (Sai), mit denen die Tastkugel (7) gegenüber dem Werkstück (15) verfahren wird sowie auch die zugeordneten Drehdaten ($\alpha$i), gemäß derer das Werkstück (15) um die Achse (29) auf dem Drehtisch (25) gedreht werden soll. Diese Bahndaten (Sai) und Drehdaten ($\alpha$i) werden durch eine Transformation in das Steuersystem, d.h. das Maschinenkoordinatensystem (MKS) übertragen.

In der Funktionsbaugruppe (12) "Interpolation" werden im steuereigenen Systemtakt die aufbereiteten diskreten abzufahrenden Bahndaten (Sai) sowie die Drehwinkeldaten ($\alpha$ai) nach einem vorgegebenen Algorithmus, beispielsweise linear oder nach einem Spline-Algorithmus interpoliert und Lagesollwerte (Lai) und Drehwinkelsollwerte (L$\alpha$i) an den nachgeordneten Lageregler (3) für die Antriebe der drei Meßachsen des Koordinatenmeßgerätes sowie an den Lageregler (18) für den Antrieb (19) der Dreheinheit (25) übergeben.

Die im Lageregler erzeugten Lagesollwerte werden anschließend von digital nach analog gewandelt und als analoge Stellgröße an die drei Antriebe (4) für die x-, y- und z-Achse des Koordinatenmeßgerätes übergeben. Ebenfalls an den Lageregler (3) angeschlossen sind die Wegmeßsysteme (5) des Koordinatenmeßgerätes und zwar über die Funktionsbaugruppe (6) "Meßwerterfassung". Diese Funktionsbaugruppe (6) sorgt für eine zyklische Erfassung der Maschinenpositionen (xm, ym, zm), also der Positionen des Tastkopfes (2) im Maschinenkoordinatensystem (MKS) und schließt den Positionsregelkreis für die drei Meßachsen des Koordinatenmeßgeräts.

Analog werden die im Lageregler (18) erzeugten Lagesollwerte von analog nach digital gewandelt und als analoge Stellgrößen an den Antrieb (19) der Dreheinheit (25) zur Verstellung der Drehtischposition ($\alpha$m) über die Achse (29) übergeben. Ebenfalls an den Lageregler (18) angeschlossen ist das Winkelmeßsystem (21) über die Funktionsbaugruppe (22) "Meßwerterfassung". Diese Funktionsbaugruppe (21) sorgt für eine zyklische Erfassung der Drehtischposition ($\alpha$m).

Die Steuerung (1) nach Figur 1 enthält ebenfalls die Elektronik (8) zur Weiterverarbeitung der von den Meßwertgebern im Tastkopf (2) abgegebenen Signale, die das Auslenken des Tasters (2, 7, 40) beim Kontakt der am Taststift (40) befestigten Tastkugel (7) mit dem Werkstück (15) in den drei Raumvorrichtungen beschreiben. Die von diesen Meßwertgebern kommenden und in der Elektronik aufbereiteten Lagesignale werden in der Funktionsbaugruppe (9) in digitale Signale, im folgenden die Tasterauslenkung (xT, yT, zT) umgewandelt. Die Tasterauslenkung (xT, yT, zT) ist ebenso wie die Maschinenpositionen (xm, ym, zm) und die Drehtischposition ($\alpha$m) auf die Sendeschnittstelle (17) gelegt und werden vom Rechner (20) zur Berechnung des Meßergebnisses benötigt.

Die Steuerung (1) enthält außerdem die Antriebe für die Auslenkung des Taststifts (40) im Tastkopf (2). Diese bestehen aus Kraftgeneratoren wie z.B. Linearmotoren oder Tauchspulenmagneten. Die Antriebe lenken den Taststift (40) auf ein vorgegebenes Signal hin in den drei Raumrichtungen (x, y, z) aus. Die entsprechende Funktionsbaugruppe (13) "Antriebe Tako" erhält die Information über Betrag und Richtung der einzustellenden Meßkraft (Fsoll) ebenfalls von der Funktionsbaugruppe (11), die diese Informationen aus der übergebenen Information (Fsoll) über den Betrag der Meßkraft und aus den Normalenvektoren ($\vec{N}i$) generiert. Im beschriebenen Falle wird die Richtung der Meßkraft ($\vec{F}$soll) stets in Richtung der Flächennormalen ($\vec{N}i$) vorgegeben.

Zusätzlich ist in der Steuerung ein Regler (16) vorgesehen, der mit dem Ausgang der Funktionsbaugruppe (9) "AD-Wandler" verbunden ist. Die Taststiftauslenkung (xT, yT, zT) wird hierbei von dem Regler (16) überwacht. Überschreitet die Taststiftauslenkung (xT, yT, zT) definierte Grenzwerte, so schaltet der besagte Regler (16) eine Störgröße auf den Interpolator (12) auf, so daß der Tastkopf um einen entsprechenden Betrag vom zu vermessenden Werkstück (15) weg versetzt wird.

Eine Steuerung ohne die Dreheinheit (25) und die dazugehörigen Baugruppen (18, 19, 21 und 22) ist in der DE 42 12 455 C2 sowie der entsprechenden US 5,471,406 der Anmelderin detailliert beschrieben, auf die an dieser Stelle ausdrücklich Bezug genommen wird.

Auch bei der zusätzlichen Dreheinheit (29) und den der Dreheinheit zugeordneten Funktionsbaugruppen handelt es sich um ein in der Koordinatenmeßtechnik bereits langjährig unter dem Begriff Drehtisch bekanntes Bauteil, welches beispielsweise aus der bereits oben beschriebenen US 4,852,402 entnehmbar ist oder aber auch von der Anmelderin Carl Zeiss als entsprechende Komponente eines Koordinatenmeßgeräts mit der Produktbezeichnung "UPMC", was für "Universal-Precision-Measurement-Center" steht, erhältlich ist.

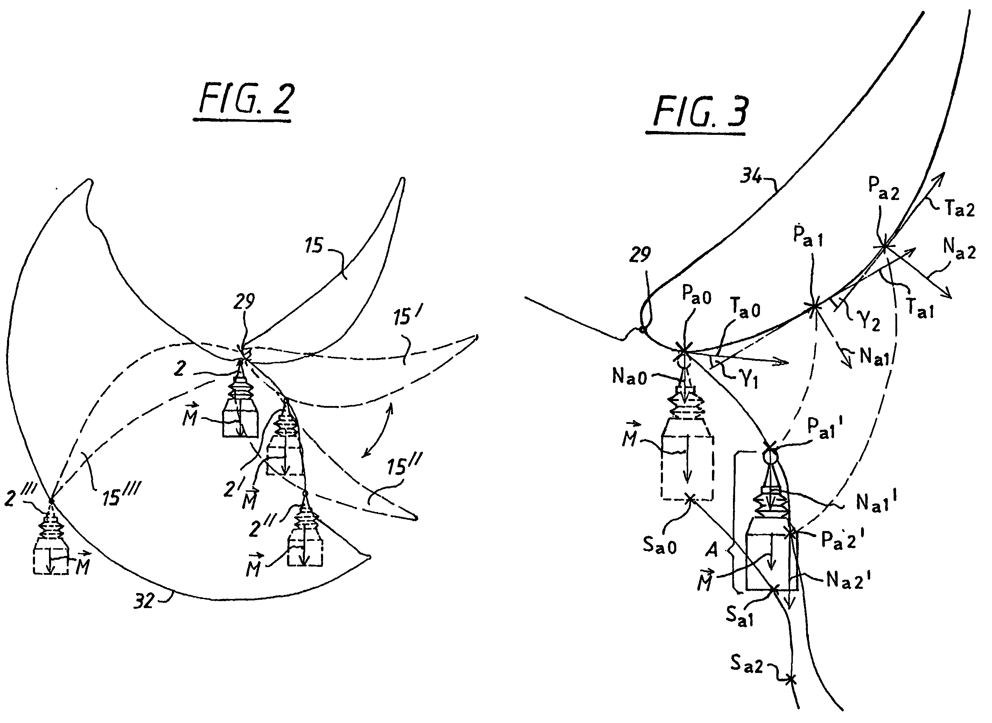

Die genaue Funktionsweise, wie die Funktionsbaugruppe (11) "Transformation Steuerdaten" die Bahndaten (Sai) sowie die Drehwinkeldaten ($\alpha$i) für diese Steuerung errechnet und wie die Funktionsbaugruppe (12) "Interpolation" die Lagesollwerte (Lai) und die Drehwinkelsollwerte (L$\alpha$i) berechnet, soll nunmehr anhand der Figuren 2 bis 4 näher erläutert werden. Das Werkstück (15) soll in dem hier gezeigten Beispiel in einer orthogonal zur Drehachse (29) orientierten Ebene vermessen werden. Bei dem Werkstück (15) handelt es sich beispielhaft um eine Turbinenschaufel.

In Figur 2 ist hierbei die Bahn (32) zu sehen, entlang derer der Abtastpunkt der Tastkugel (7) gemäß dem erfindungsgemäßen Verfahren verfahren wird. Die Bahn wurde hierbei derart berechnet, daß die Vorzugsmeßrichtung ($\vec{M}$) in die die Tastkugel bei Abweichung der Istform des Werkstückes (15) von einer vorgegebenen Sollform ausgelenkt wird, mit der Längsachse (33) des Tasters (2,7,40) zusammenfällt. Die Vorzugsmeßrichtung ($\vec{M}$) entspricht hierbei der aufgeschalteten Meßkraft ($\vec{F}$ soll) und ist lediglich richtungsmäßig vertauscht.

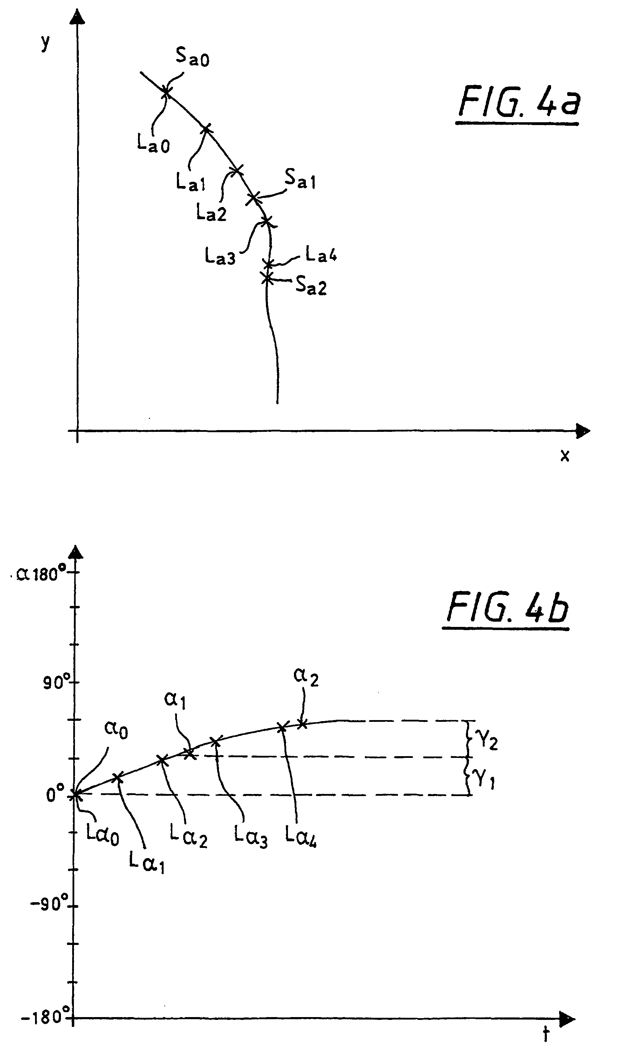

Um dies zu erreichen, muß das Werkstück (15) derart um die Drehachse (29) der Dreheinheit (25) gedreht werden, so daß in den jeweiligen Abtastpunkten, in denen die Tastkugel (7) die Oberfläche des zu vermessenden Werkstückes (15) abtastet, die Werkstückoberfläche normal auf die Meßrichtung steht. Einzelne, willkürlich gezeigte Drehstellungen des Werkstückes (15) sind hierbei mit (15, 15', 15", 15''') bezeichnet und die entsprechenden Stellungen des Tasters (2,7,40) mit den Positionen (2, 2', 2", 2'''). Wie nun genau die Lagesollwerte (Lai) berechnet werden, gemäß derer der Tastkopf(2) verfahren wird und die dazugehörigen Drehwinkelsollwerte (L$\alpha$i), gemäß derer die Dreheinheit (25) gedreht wird, soll nunmehr im Zusammenhang mit den Figuren 3 und 4 näher erläutert werden.

Wie aus Figur 3 zu ersehen ist, wurden unter anderem ursprünglich an die Steuerung (1) vom Rechner (20) als Geometriedaten die Punkte (Pai) sowie die Normalenvektoren ($\vec{N}$ai) übergeben, die eine abzutastende Linie auf der Werkstückoberfläche des Werkstückes (15) definieren. Der Einfachheit halber sind in Figur 3 nur die drei Punkte (Pa0, Pa1, Pa2) dargestellt. Es versteht sich, daß die hier gezeigten Punkte (Pai) nur vollkommen schematisch dargestellt sind, um das Prinzip der Erfindung zu erläutern und daß tatsächlich die Punkte wesentlich näher beieinander liegen. Nach Übergabe der Geometriedaten vom Rechner (20) über die Empfangsschnittstelle (10) an die Funktionsbaugruppe (11) "Transformation Steuerdaten" wird in der Funktionsbaugruppe (11) "Transformation Steuerdaten" aus den Punkten (Pai) eine Abtastlinie (34) ermittelt, entlang derer der Abtastpunkt der Tastkugel (7) dann über das Werkstück (15) geführt werden soll. Hierzu werden die Punkte (Pai) über beispielsweise Bezier-Splines miteinander verbunden, so daß hierdurch die Abtastlinie (34) ermittelt wird.

In einem nächsten Schritt werden zu der besagten Abtastlinie (34) Tangentenvektoren (Tai) ermittelt, die in den betreffenden Punkten (Pai) jeweils tangential auf die ermittelte Abtastlinie (34) stehen. Die Ausrichtung der Tangentenvektoren (Tai) ist in dem gezeigten Beispiel in Verfahrrichtung des Abtastpunktes berechnet.

In einem nächsten Schritt werden die Punkte (Pai) um die Drehachse (29) rechnerisch rotiert und zwar solange, bis die Normalenvektoren ($\vec{N}$ai) gegenüber der definierten Vorzugsmeßrichtung ($\vec{M}$) in einem Winkel von 0° stehen bzw. die Tangentenvektoren ($\vec{T}$ai) in einem Winkel von 90° stehen, so daß die Oberfläche des Werkstückes in dem hier dargestellten Fall in den betreffenden Punkten (Pai') immer normal zur Vorzugsmeßrichtung ($\vec{M}$) steht. Der Drehwinkel ($\alpha$i), um den der jeweilige Punkt (Pai) rotiert werden muß ergibt sich hierbei aus den Winkeln ($\gamma$i) der Tangentenvektoren (Tai) zueinander. Wie aus Figur 3 zu sehen ist, entspricht der Winkel ($\gamma$1) zwischen den Tangentenvektoren (Ta0 und Ta1) demjenigen Drehwinkel ($\alpha$1), um den der Punkt (Pa1) um die Drehachse (29) rotiert werden muß, damit der Tangententvektor (Ta1) bzw. der Normalenvektor (Na1) dieselbe Ausrichtung wie der Tangentenvektor (Ta0) bzw. der Normalenvektor (Na0) aufweist. Analog ergibt sich der Drehwinkel ($\alpha$2) für den Punkt (Pa2) durch die Summe der Winkel ($\gamma$1 und $\gamma$2) zwischen den Tangentenvektoren (Ta0 und Ta1 sowie Ta1 und Ta2) usw..

Die rotierten Punkte (Pai') definieren hierbei eine Linie auf der der Abtastpunkt der Tastkugel (7) beim Abtasten des Werkstückes (15) geführt wird. Aus den besagten rotierten Punkten (Pai') können über Vektorarithmetik die Bahnpunkte (Sai) derjenigen Bahn berechnet werden, auf der der Taster (2) bewegt wird. So steht die Position des Abtastpunktes (Pai) der Tastkugel (7) gegenüber den Bahnpunkten (Sai) in einer festen Beziehung und kann über einen hier der Übersichtlichkeit halber nicht gezeigten Ablagevektor beschrieben werden. Die Bahnpunkte (Sai) können nun einfach ermittelt werden, indem zum Ortsvektor der rotierten Punkte (Pai') der besagte Ablagevektor hinzuaddiert wird.

Eine abschnittsweise Darstellung der so ermittelten Bahnpunkte (Sai) ist in Figur 4a aufgetragen und die jeweils dazugehörigen Drehwinkel ($\alpha$i) sind in Figur 4b aufgetragen. Die berechneten Bahnpunkte (Sai) und Drehwinkel ($\alpha$i) werden nunmehr von der in Figur 1 dargestellten Funktionsbaugruppe (11) "Transformation Steuerdaten" an die Funktionsbaugruppe (12) "Interpolation" übergeben, in der die Lagesollwerte (Lai) für die Achsensteuerung des Tasters (2) erzeugt werden, sowie auch die Drehwinkelsollwerte (L$\alpha$i) für die Drehtischsteuerung erzeugt.

Hierzu werden die Bahnpunkte (Sai) und die Drehwinkelpunkte ($\alpha$i) über Splines interpoliert, so daß hierdurch eine Kurve entsteht. In einem nächsten Schritt wird auf einer den besagten Kurven, vorzugsweise auf der Kurve mit den Bahnpunkten (Sai) für den Taster Lagesollwerte (Lai) erzeugt. Die Lagesollwerte (Lai) definieren hinterher die durch die Achsensteuerung festgelegte Position des Tasters (2, 7, 40) und werden bei der Meßaufgabe derart eingesetzt, daß der Taster (2, 7, 40) in einem festdefinierten Zeittakt von Lagesollwert (Lai) zum nächsten Lagesollwert (Lai+1) übergeht. Die Lagesollwerte (Lai) werden hierbei derart erzeugt, daß der Taster (2, 7, 40) eine maximal zulässige Bahngeschwindigkeit und gleichfalls auch eine maximal zulässige Bahnbeschleunigung nicht überschreitet, wie dies sehr detailliert in unserer deutschen Offenlegungsschrift DE 195 29 547 A1 beschrieben wurde, auf die hiermit ausdrücklich Bezug genommen wird.

Im Unterschied zu dem in der DE 195 29 547 A1 beschriebenen Verfahren müssen in dem hier beschriebenen Verfahren zusätzlich auch Drehwinkelsollwerte (L$\alpha$i) zu den betreffenden Lagesollwerten (Lai) festgelegt werden. Deshalb wird nach Festlegung jedes Lagesollwertes (Lai) unmittelbar ein zugehöriger Drehwinkelsollwert (L$\alpha$i) berechnet. Die Berechnung erfolgt derart, daß zu einem ermittelten Lagesollwert (La$_i$) das Verhältnis ermittelt wird, in dem dieser die Linie zwischen den beiden angrenzenden Bahnpunkten (Sai) und (Sai+1) teilt und entsprechend dem Teilungsverhältnis zwischen zwei zu den entsprechenden Bahnpunkten zugehörigen Drehwinkeln ein entsprechender Drehwinkelsollwert (L$\alpha$i) abgetragen wird, der die Kurve zwischen den beiden entsprechenden Drehwinkeln ($\alpha$i und $\alpha$i+1) entsprechend teilt. Hinsichtlich des derart erzeugten Lagesollwinkels (L$\alpha$i) muß ferner untersucht werden, ob auch hierbei einerseits die durch den neueingefügten Lagesollwinkel (L$\alpha$i) erzeugte Winkelgeschwindigkeit einen Maximalwert, sowie die dazugehörige Winkelbeschleunigung einen Maximalwert überschreitet. Ist dies der Fall, so müssen solange die Abstände der Lagesollwerte (Lai) korrigiert werden, bis die Bedingungen hinsichtlich maximaler Winkelgeschwindigkeit und maximaler Winkelbeschleunigung eingehalten werden können.

Auf Basis der so erzeugten Lagesollwerte (Lai) und Drehwinkelsollwerte (L$\alpha$i) kann dann wie bereits oben beschrieben das Meßverfahren durchgeführt werden.

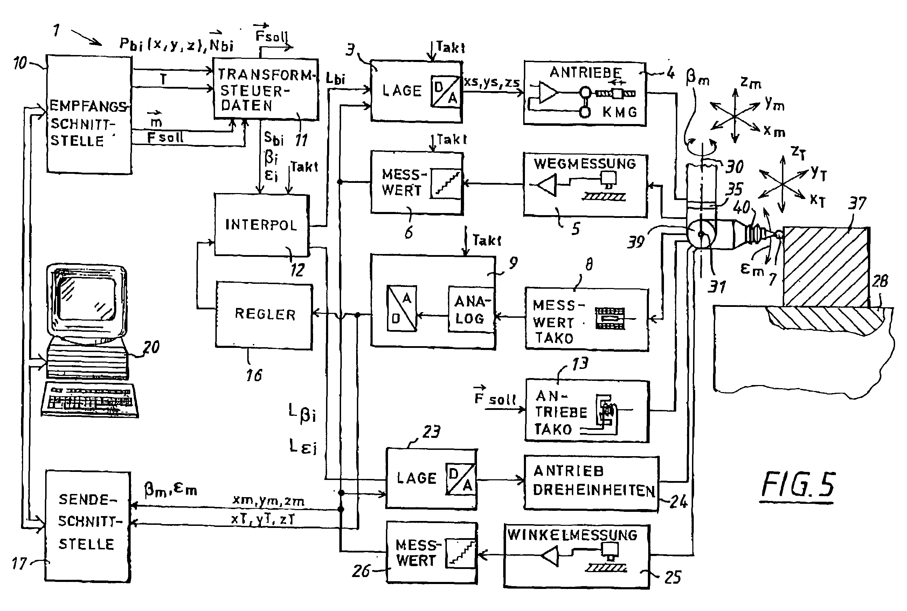

Figur 5 zeigt eine andere Variante einer erfindungsgemäßen Steuerung (1), bei dem der Taster (2, 7, 40) über eine Dreheinheit (35) um eine Drehachse (30) in Richtung des Pfeils ($\beta$m) rotiert werden kann. Zusätzlich ist eine Dreheinheit (39) vorgesehen, über der Taster (2, 7, 40) auch entlang dem Pfeil ($\varepsilon$m) geschwenkt werden kann.

Die Ansteuerung der Dreheinheit (35) und der Schwenkeinheit (36) erfolgt in analoger Weise zu dem Drehtisch (25) über die Funktionsbaugruppen (23, 24, 25, 26).

Eine entsprechende Drehschwenkeinheit ist beispielsweise in unserem europäischen Patent EP 0 317 967 B1 oder dem entsprechenden US-Patent 4,888,877 beschrieben, auf das hiermit ebenfalls ausdrücklich Bezug genommen wird.

Weiterhin unterscheidet sich die Steuerung gemäß Figur 1 darin, daß die Funktionsbaugruppe (11) "Transformation Steuerdaten" die Bahnpunkte (Sbi) und die Drehwinkel ($\beta$i, $\varepsilon$i) auf eine andere Art und Weise festlegt, als dies die Funktionsbaugruppe (11) gemäß Figur 1 macht.

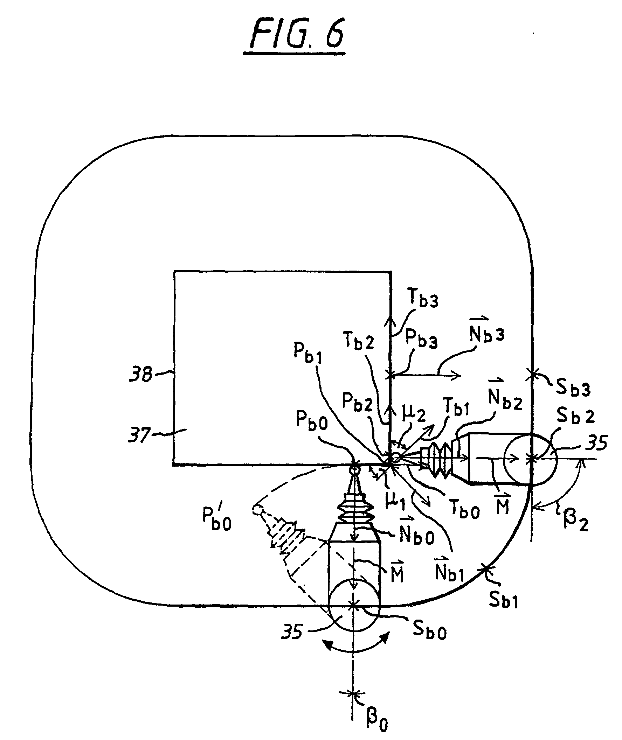

Die genaue Funktionsweise zur Berechnung der Lagesollwerte (Lbi) und der Drehwinkelsollwerte (L$\beta$i) soll nunmehr anhand von Figur 6 beschrieben werden.

Analog zu Figur 1 werden auch in Figur 6 die besagten Punkte (Pbi), die eine auf der Werkstückoberfläche abzutastende Linie definieren, vom Rechner (20) über die Empfangsschnittstelle (10) an die Funktionsbaugruppe (11) "Interpolation" übergeben. Analog zum oben beschriebenen Vorgehen wird über Splines eine Abtastlinie (38) errechnet und die entsprechenden Tangentenvektoren (Tbi) zu den zugehörigen Punkten (Pbi) ermittelt.

Es sei an dieser Stelle nochmals bemerkt, daß es sich auch bei Figur 6 um eine rein schematische Darstellung zur Erläuterung des erfindungsgemäßen Verfahrens handelt und daß selbstverständlich die Punkte (Pbi) erheblich näher zusammenliegen.

In der hier gezeigten Ausführungsvariante entsprechen die Punkte (Pbi) bereits den von der Tastkugel (7) abzutastenden Punkten. Zur Berechnung der Bahnpunkte (Sbi), auf denen die Dreheinheit (35) geführt wird, und den entsprechenden Drehwinkeln ($\beta$i) um die die Dreheinheit (35) gedreht werden muß, wird wie folgt vorgegangen.

Zunächst wird von einer Startposition ausgegangen, in der die Tastkugel (7) das Werkstück (37) im ersten Punkt (Pb0) mit dem gewünschten Tastwinkel, der hierbei ebenfalls als 0° gewählt ist, antastet. Die genaue Lagezuordnung des Abtastpunktes der Tastkugel (7) und des Bahnpunktes (Sb0) wird auch hierbei über einen geeigneten Ablagevektor mit konstanter Länge beschrieben. Allerdings ändert sich die Richtung des Ablagevektors während des Meßverlaufes kontinuierlich entsprechend dem Drehwinkel der Dreheinheit (35).

Zur Bestimmung der Bahnpunkte (Sbi) und der Drehwinkel ($\beta$i) wird nun aus den Winkeln ($\mu$i) zwischen den Tangentenvektoren ($\vec{T}$bi) analog zu dem in Figur 1 gezeigten Beispiel ein Drehwinkel ($\beta$i) ermittelt, um den der Tastkopf (2, 7, 40) im jeweiligen Punkt (Pbi) um die Dreheinheit rotiert werden muß, damit die Vorzugsmeßrichtung ($\vec{M}$) in dem hier gezeigten Ausführungsbeispiel mit dem Normalenvektor ($\vec{N}$bi) den besagten Tastwinkel einschließt, der hier analog zu oben als 0° definiert wurde. Über Vektorarithmetik wird dann unter Berücksichtigung des Drehwinkels der neue Bahnpunkt (Sbi+1) ermittelt.

Die Möglichkeiten der Bestimmung der Bahnpunkte sind vielfältig und sollen hierbei beispielhaft gemäß einer Variante anhand des Wechsels vom Punkt (Pb0) auf den Punkt (Pb1) erläutert werden. Zunächst wird analog zu dem in den Figuren 1 bis 4 beschriebenen Beispiel ein entsprechender Drehwinkel (β1) ermittelt, der gleich dem Winkel (μ1) zwischen den Tangentenvektoren ($\vec{T}$b0 und $\vec{T}$b1) ist. Ausgehend vom ersten abzutastenden Punkt (Pb0) wird nunmehr ein Zwischenpunkt (Pb0') berechnet, der durch Rotation des Punktes (Pb0) um den Bahnpunkt (Sb0) mit dem Drehwinkel (β1) erzeugt wurde. Der neue Bahnpunkt (Sb1) kann nunmehr einfach ermittelt werden, indem zwischen dem Ortsvektor des Zwischenpunktes (Pb0') und dem Ortsvektor des Bahnpunktes (Sb0) ein neuer Ablagevektor bestimmt wird, der damit dem um den besagten Drehwinkel (β1) rotierten ursprünglichen Ablagevektor entspricht und der so ermittelte neue Ablagevektor zum Ortsvektor des Punktes (Pb1) hinzuaddiert wird.

Bei der Berechung der nächsten Bahnpunkte (Sb2, Sb3 usw.) wird vollkommen analog vorgegangen.

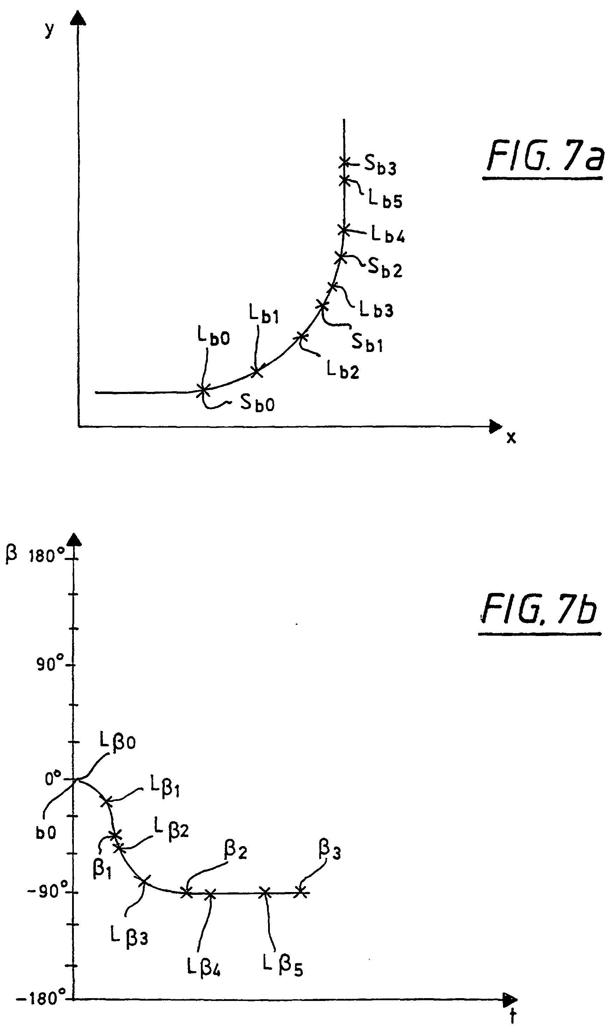

In der Figur 7a ist hierbei abschnittsweise für die Punkte (Pb$_0$ - Pb$_3$) die entsprechenden, nach eben beschriebenen Verfahren, berechneten Bahnpunkte (Sb$_0$ - Sb$_3$) aufgezeichnet worden, während in Figur 7b die zu den Bahnpunkten (Sb$_0$ - Sb$_3$) zugehörigen Drehwinkel (β$_0$ - β$_3$) der Dreheinheit (35) aufgezeichnet wurden.

Die Lagesollwerte (Lbi) sowie die zugehörigen Drehwinkelsollwerte (Lβi) über die dann der Taster (2, 7, 40) gesteuert verfahren wird, werden analog zu oben genanntem Vorgehen berechnet. Auch hierbei werden zunächst bei den Bahnpunkten (Sbi) und den Drehwinkeln (βi) zwischen den entsprechenden Punkten Splines eingefügt, die den Verlauf der entsprechenden Kurven festlegen.

In einem nächsten Schritt werden zwischen den Bahnpunkten (Sbi) Lagesollwerte (Lbi) derart eingefügt, daß der Taster bei der Abarbeitung der Lagesollwerte (Lbi) eine maximal zulässige Bahngeschwindigkeit, sowie eine maximal zulässige Bahnbeschleunigung nicht überschreitet. Nach jedem neueingefügten Lagesollwert (Lai) wird entsprechend dem Verhältnis, in dem dieser die Strecke zwischen den beiden zugehörigen Bahnpunkten (Sbi und Sbi+1) teilt entsprechend auf der zugehörigen Bahn für die Drehwinkel ein entsprechender Drehwinkelsollwert (Lβi) abgetragen und auch hinsichtlich der Drehwinkelsollwerte (Lβi) überprüft, ob der neu eingefügte Drehwinkelsollwert (Lβi) die Erfordernisse hinsichtlich maximaler Winkelgeschwindigkeit der Dreheinheit (35) und hinsichtlich maximaler Winkelbeschleunigung der Dreheinheit (35) erfüllt. Ist dies nicht der Fall, so muß der in der Bahnkurve neu eingefügte Lagesollwert (Lbi) entsprechend korrigiert werden und das Verfahren analog solange durchgeführt werden, bis die Erfordernisse hinsichtlich maximaler Geschwindigkeit und maximaler Beschleunigung in beiden Kurven erfüllt ist.

In den hier gezeigten Ausführungsbeispielen wurde die gesamte Messung zur Demonstration des erfindungsgemäßen Verfahrens an sehr einfachen Beispielen demonstriert. Einerseits liegen die abzutastenden Linien (34, 38) in einer normal zur Drehachse (29, 30) liegenden Ebene, andrerseits ist die Werkstückoberfläche so beschaffen, daß die Normalenvektoren ($\vec{N}$ai,$\vec{N}$bi), die Tangentenvektoren ($\vec{T}$ai, $\vec{T}$bi) sowie die Vorzugsmeßrichtung ($\vec{M}$) orthogonal auf die entpsrechende Drehachse (29, 30) mit der besagten ersten Ausrichtung stehen, sodaß für die gezeigten Beispiele unmittelbar die bezeichneten Vektoren benutzt werden konnten.

Die abzutastende Linie kann jedoch auch in Richtung der Drehachse (29) bzw. (30) variieren. Hierbei müssen dann anstelle der Normalenvektoren ($\vec{N}$ai, $\vec{N}$bi), der Tangentenvektoren ($\vec{T}$ai, $\vec{T}$bi) sowie die Vorzugsmeßrichtung ($\vec{M}$) jeweils die Projektionen der betreffenden Vektoren auf einer orthogonal zur Drehachse (29, 30) stehenden Normalenebene verwendet werden. Für diesen allgemeineren Fall gilt dann ebenfalls wieder, daß die Lagesollwerte (Lai,Lbi) und die Drehwinkelsollwerte (Lαi, Lβi) derart berechnet sind, daß die Projektion der Vorzugsmeßrichtung ($\vec{M}$) auf einer orthogonal zur Drehachse liegende Normalenebene mit der Projektion eines im Abtastpunkt normal auf die Werkstückoberfläche stehenden Normalenvektors ($\vec{N}$ai,$\vec{N}$bi) auf besagte Normalenebene weitestgehend einen definierten Tastwinkel einschließt.

Selbstverständlich kann weiterhin auch eine abzutastende Linie abgefahren werden, bei der der besagte Winkel zwischen den Normalenvektoren und der Drehachse (29, 30) variiert. Um derartige abzutastende Linien abfahren zu können, muß die Vorzugsmeßrichtung ($\vec{M}$) entsprechend verstellt werden.

Dies kann einerseits geschehen, indem, wie in den Figuren 1 und 5 gezeigt mehrachsige Taster (2,7,40) verwendet werden, über die die auf die Werkstückoberfläche wirkende Meßkraft ($\vec{F}$soll) entsprechend verstellt werden kann. Das Verstellen der Meßkraft ($\vec{F}$soll) erfolgt entweder, wie oben beschrieben über Meßkraftgeneratoren (vgl. Funktionsbaugruppe 13, "Antriebe Tako"), oder über eine entsprechende Auslenkung des Taststiftes (40), wenn die Meßkraft über die Rückstellkraft der Tastereigenen Federn erzeugt wird.

Für den Fall, daß die Vorzugsmeßrichtung ($\vec{M}$) konstant gehalten werden soll, kann auch der Taster (2, 7, 40) um eine weitere Dreheinheit (39) schwenkbar sein, wobei die Drehachse (31) dieser Dreheinheit (39) orthogonal auf die Drehachse der anderen Dreheinheit (35) steht. Über diese Drehachse kann der Taster (2) nunmehr zusätzlich immer so verstellt werden, daß die Vorzugsmeßrichtung ($\vec{M}$) überhaupt nicht mehr variiert werden muß. Die entsprechenden Drehwinkel, um die diese zusätzliche Dreheinheit (39) gedreht werden muß, können vollkommen analog aus dem Winkel der Projektionen der oben beschriebenen Normalenvektoren ($\vec{N}$ai bzw. $\vec{N}$bi) oder besser noch der oben beschriebenen Tangentenvektoren ($\vec{T}$ai bzw. $\vec{T}$bi) auf eine Normal zur weiteren Drehachse (31) stehenden Normalenebene berechnet werden. Die Bahnpunkte können dann einfach über Vektorarithmetik, analog wie oben beschrieben, bestimmt werden.

Die nur beispielhaft in Figur 5 vorgesehenen Dreheinheiten (35 und 39) können selbstverständlich zu gleichem Zweck auch in der Steuerung gemäß Figur (1) vorgesehen werden. Soll hierbei sowohl das Werkstück (15) um die Dreheinheit (25), wie auch der Taster (2) um die Dreheinheit (35) gleichzeitig gedreht werden, bis der Tasterwinkel übereinstimmt, so kann hierzu beispielsweise, wie oben ausführlich erläutert, der Drehwinkel ermittelt werden, um den entweder das Werkstück (15) oder der Taster (2, 7, 40) allein gedreht werden müßte, um den Tastwinkel zu erreichen, wobei dann das Werkstück (15) um die Hälfte des ermittelten Drehwinkels gedreht wird und der Taster entsprechend um die andere Hälfte des ermittelten Drehwinkels.

### Patentansprüche

1.　Verfahren zur Steuerung von Koordinatenmeßgeräten nach Solldaten mit einem beweglich gelagerten Taster (2, 7, 40), der kontinuierlich die. Oberfläche eines zu vermessenden Werkstückes (15) in einem Abtastpunkt mit einer Vorzugsmeßrichtung ($\vec{M}$) abtastet, wobei zumindest entweder der Taster oder aber das Werkstück (15) zusätzlich um mindestens eine Drehachse (29, 30) mit einer ersten Ausrichtung drehbar gelagert ist, mit folgenden Verfahrensschritten

-　Bereitstellen von Geometriedaten, die zumindest Punkte (Pai, Pbi) auf der Werkstückoberfläche umfassen, die eine abzutastende Linie (34, 38) definieren,
-　Berechnung von Steuerdaten (Lai, L$\alpha$i bzw. Lbi, L$\beta$i) zur Steuerung des Meßablaufes aus den Geometriedaten derart, daß zur Vermessung des Werkstückes (15, 38) unter anderem das Werkstück und/oder der Taster um die Drehachse gedreht werden.

2.　Verfahren nach Anspruch 1, wobei die Steuerdaten derart ermittelt werden, daß die Projektion der Vorzugsmeßrichtung ($\vec{M}$) auf eine orthogonal zur Drehachse liegende Normalenebene mit der Projektion eines im Abtastpunkt normal auf die Werkstückoberfläche stehenden Normalenvektors ($\vec{N}$ai, $\vec{N}$bi) auf besagte Normalenebene weitestgehend einen definierten Tastwinkel einschließt.

3.　Verfahren nach Anspruch 2, wobei der Tastwinkel für jeden Punkt durch geeignete Drehung des Tasters und/oder durch geeignete Drehung des Werkstückes eingestellt wird.

4.　Verfahren nach Anspruch 1 bis 3, wobei zur Berechnung der Steuerdaten zwischen den die abzutastende Linie definierenden Punkten eine Abtastlinie (34, 38) ermittelt wird.

5.　Verfahren nach Anspruch 4, wobei ferner zur Ermittlung der Steuerdaten in den die Abtastlinie definierenden Punkten Tangentenvektoren ($\vec{T}$ai bzw. $\vec{T}_{bi}$) an die Abtastlinie ermittelt werden und aus den Winkeln ($\gamma$i bzw.$\mu$i) zwischen den in die besagte Normalenebene projizierten Tangentenvektoren Drehwinkel ($\alpha$i, $\beta$i) ermittelt werden.

6.　Verfahren nach Anspruch 1 bis 3, wobei zur Ermittlung der Steuerdaten Drehwinkel ($\alpha$i, $\beta$i) aus den Winkeln berechnet werden, die die abzutastende Linie definierenden Punkte (Pai) mit der Drehachse (29) einschließen, um die das Werkstück (15) gedreht wird.

7.　Verfahren nach Anspruch 1 bis 3, wobei zur ermittlung der Steuerdaten Drehwinkel ($\alpha$i, $\beta$i) aus Normalenvektoren ($\vec{N}$ai, $\vec{N}$bi) berechnet werden, die zu jedem die abzutastende Linie definierenden Punkt eine normal auf die Werkstückoberfläche stehende Richtung angeben, wobei die Drehwinkel aus den Winkeln zwischen den in die besagte Normalenebene projizierten Normalenvektoren ermittelt werden.

8.　Verfahren nach Ansprüchen 5 bis 7, wobei zur Ermittlung der Steuerdaten unter Berücksichtigung der ermittelten Drehwinkel Bahnpunkte (Sbi) ermittelt werden, die die durch den Taster abzufahrende Bahn definieren.

9.　Verfahren nach Anspruch 8, wobei zur Ermittlung der Steuerdaten auf Basis der Bahnpunkte Lagesollwerte (Lai, Lbi) für die Steuerung der Tasters und auf Basis der zugehörigen Drehwinkel Drehwinkelsollwerte (L$\alpha$i, L$\beta$i) für die Steuerung des Drehwinkels derart ermittelt werden, daß der Taster eine festgelegte Maximalbahngeschwindigkeit und eine festgelegte Maximalbahnbeschleunigung nicht überschreitet und daß die Dreheinheit eine festgelegte Maximalwinkelbeschleunigung und eine festgelegte Maximalwinkelgeschwindigkeit nicht überschreitet.

10.　Verfahren nach Ansprüchen 1 bis 9, wobei der Taster um eine zweite Drehachse (31) drehbar ist, die orthogonal zu allen Drehachsen mit besagter erster Ausrichtung steht und wobei die Steuerdaten derart ermittelt werden, daß die Vorzugsmeßrichtung während des gesamten Meßablaufes immer in einem festen Tastwinkel zu den Normalenvektoren steht.

11. Verfahren nach Anspruch 1 bis 10, wobei der Taster ein berührender Taster oder ein optischer Taster ist.

12. Koordinatenmeßgerät zum Abtasten eines Werkstückes nach Solldaten mit

- einem beweglich geführten Taster (2, 7, 40), der die Oberfläche des Werkstückes (15, 37) in einem Abtastpunkt in einer definierbaren Vorzugsmeßrichtung ($\vec{M}$) mißt
- wenigstens einer Dreheinheit (25, 35), über die das Werkstück und/oder der Taster um eine Drehachse (29, 30) mit einer ersten Ausrichtung rotiert werden kann
- einer Steuerung, die auf Basis von Geometriedaten, Steuerdaten zur Steuerung des Meßablaufes aus den Geometriedaten derart ermittelt, daß zur Vermessung des Werkstückes unter anderem das Werkstück und/oder der Taster um die Drehachse gedreht werden, wobei die Geometriedaten Punkte (Pai, Pbi) auf der Werkstückoberfläche umfassen, die die abzutastende Linie definieren.

13. Koordinatenmeßgerät nach Anspruch 12, wobei die Steuerung die Steuerdaten (Lai, L$\alpha$i bzw. Lbi, L$\beta$i) derart ermittelt, daß die Projektion der Vorzugsmeßrichtung ($\vec{M}$) auf eine orthogonal zur Drehachse liegende Normalenebene mit der Projektion eines im Abtastpunkt normal auf die Werkstückoberfläche stehenden Normalenvektors ($\vec{N}$ai, $\vec{N}$bi) auf besagte Normalenebene weitestgehend einen definierten Tastwinkel einschließt.

14. Koordinatenmeßgerät nach Anspruch 13, wobei die Steuerung die Steuerdaten so erstellt, daß der besagte Tastwinkel für jeden Punkt durch geeignete Drehung des Tasters und/oder durch Drehung des Werkstückes eingestellt wird.

15. Koordinatenmeßgerät nach Anspruch 12 oder 14, wobei die Steuerung zur Berechnung der Steuerdaten zwischen den die abzutastende Linie definierenden Punkten eine Abtastlinie (34, 38) ermittelt.

16. Koordinatenmeßgerät nach Anspruch 15, wobei die Steuerung ferner zur Ermittlung der Steuerdaten in den die Abtastlinie definierenden Punkten Tangentenvektoren ($\vec{T}$ai, $\vec{T}$bi) an die Abtastlinie berechnet und aus den Winkeln ($\gamma$i, $\mu$i) zwischen den in die besagte Normalenebene projezierten Tangentenvektoren Drehwinkel ($\alpha$i, $\beta$i) ermittelt.

17. Koordinatenmeßgerät nach Anspruch 12 bis 14, wobei die Steuerung zur Ermittlung der Steuerdaten Drehwinkel ($\alpha$i, $\beta$i) aus den Winkeln berechnet, die die die abzutastende Linie definierenden Punkte mit der Drehachse einschließen, um die das Werkstück gedreht wird.

18. Koordinatenmeßgerät nach Anspruch 12 oder 14, wobei die Steuerung zur Ermittlung der Steuerdaten Drehwinkel aus Normalenvektoren ($\vec{N}$ai, $\vec{N}$bi) berechnet, die zu jedem die abzutastende Linie definierenden Punkt eine normal auf die Werkstückoberfläche stehende Richtung angeben, wobei die Drehwinkel aus den Winkeln zwischen den in die besagte Normalenebene projezierten Normalenvektoren ermittelt werden.

19. Koordinatenmeßgerät nach Ansprüchen 12 bis 18, wobei die Steuerung unter Berücksichtigung der ermittelten Drehwinkel Bahnpunkte (Sai, Sbi) ermittelt, die die durch den Taster abzufahrende Bahn definieren.

20. Koordinatenmeßgerät nach Anspruch 19, wobei die Steuerung auf Basis der Bahnpunkte Lagesollwerte (Lai, Lbi) für die Steuerung der Tasters und auf Basis der zugehörigen Drehwinkel Drehwinkelsollwerte (L$\alpha$i, L$\beta$i) für die Steuerung des Drehwinkels derart ermittelt, daß der Taster eine festgelegte Maximalbahngeschwindigkeit und eine festgelegte Maximalbahnbeschleunigung nicht überschreitet und daß die Dreheinheit eine festgelegte Maximalwinkelgeschwindigkeit und eine festgelegte Maximalwinkelbeschleunigung nicht überschreitet.

21. Koordinatenmeßgerät nach Anspruch 12 bis 20, wobei das Koordinatenmeßgerät zusätzlich eine weitere Dreheinheit (39) aufweist über die der Taster um eine Drehachse (31) drehbar gelagert ist, wobei die Drehachse orthogonal zu allen Drehachsen mit der besagten ersten Ausrichtung steht.

22. Koordinatenmeßgerät nach Ansprüchen 21, wobei die Steuereinheit die Steuerdaten derart ermittelt, daß die Vorzugsmeßrichtung während des gesamten Meßablaufes immer in einem festen Tastwinkel zu den Normalenvektoren steht.

23. Koordinatenmeßgerät nach Anspruch 12 bis 22, wobei der Taster ein berührender Taster oder ein optischer Taster ist.

**Claims**

1. Method for controlling coordinate measuring machines using desired data, having a moveably mounted probe (2, 7, 40) which continuously traces the surface of a workpiece (15) to be measured at a tracing point with a preferred measurement direction ($\vec{M}$), at least either the probe or else the workpiece (15) additionally being mounted rotatably about at least one axis of rotation (29, 30) with a first alignment, having the following method steps:

- providing geometrical data which comprise at least points (Pai, Pbi) on the workpiece surface which define a line (34, 38) to be traced, and
- calculating control data (Lai, Lαi and Lbi, Lβi, respectively) for controlling the measurement cycle from the geometrical data in such a way that, inter alia, the workpiece and/or the probe are/is rotated about the axis of rotation in order to measure the workpiece (15, 38).

2. Method according to Claim 1, in which the control data are determined in such a way that the projection of the preferred measurement direction ($\vec{M}$) onto a normal plane orthogonal to the axis of rotation encloses as far as possible a defined tracing angle with the projection onto said normal plane of a normal vector ($\vec{N}$ai, $\vec{N}$bi) which is normal to the workpiece surface at the tracing point.

3. Method according to Claim 2, in which the tracing angle is set for each point by suitably rotating the probe and/or by suitably rotating the workpiece.

4. Method according to Claims 1 to 3, in which a tracing line (34, 38) is determined for the purpose of calculating the control data between the points defining the line to be traced.

5. Method according to Claim 4, in which, furthermore, tangent vectors ($\vec{T}$ai and $\vec{T}$bi, respectively) to the tracing line are determined in order to determine the control data at the points defining the tracing line, and angles of rotation (αi, βi) are determined from the angles (γi and μi) between the tangent vectors projected onto said normal plane.

6. Method according to Claims 1 to 3, in which, in order to determine the control data, angles of rotation (αi, βi) are calculated from the angles which the points (Pai) defining the line to be traced enclose with the axis of rotation (29) about which the workpiece (15) is rotated.

7. Method according to Claims 1 to 3, in which, in order to determine the control data, angles of rotation (αi, βi) are calculated from normal vectors ($\vec{N}$ai, $\vec{N}$bi) which specify a direction normal to the workpiece surface in relation to each point defining the line to be traced, the angles of rotation being determined from the angles between the normal vectors projected onto said normal plane.

8. Method according to Claims 5 to 7, in which, in order to determine the control data, while taking account of the determined angles of rotation, path points (Sbi) are determined which define the path to be covered by the probe.

9. Method according to Claim 8, in which, in order to determine the control data, desired positional values (Lai, Lbi) are determined, on the basis of the path points, for controlling the probe, and desired values of the angles of rotation (Lαi, Lβi) are determined, on the basis of the associated angles of rotation, for controlling the angle of rotation, these determinations being performed in such a way that the probe does not exceed a fixed maximum path speed and does not exceed a fixed maximum path acceleration, and that the rotary unit does not exceed a fixed maximum angular acceleration and a fixed maximum angular speed.

10. Method according to Claims 1 to 9, in which the probe can rotate about a second axis of rotation (31) which is orthogonal to all the axes of rotation with said first alignment, and in which the control data are determined in such a way that the preferred measurement direction is always at a fixed tracing angle to the normal vectors during the entire measurement cycle.

11. Method according to Claims 1 to 10, in which the probe is a touch probe or an optical probe.

12. Coordinate measuring machine for tracing a workpiece using desired data, having

- a moveably guided probe (2, 7, 40) which measures the surface of the workpiece (15, 37) at a tracing point in a definable preferred measurement direction ($\vec{M}$),
- at least one rotary unit (25, 35) via which the workpiece and/or the probe can be rotated about an axis of rotation (29, 30) with a first alignment, and
- a controller which, on the basis of geometrical data, determines control data for controlling the measurement cycle from the geometrical data in such a way that, inter alia, the workpiece and/or the probe are/is rotated about the axis of rotation in order to measure the workpiece, the geometrical data comprising points (Pai, Pbi) on the workpiece surface which define the line to be traced.

13. Coordinate measuring machine according to Claim 12, in which the controller determines the control

data (Lai, L$\alpha$i and Lbi, L$\beta$i respectively), in such a way that the projection of the preferred measurement direction ($\vec{M}$) onto a normal plane orthogonal to the axis of rotation encloses as far as possible a defined tracing angle with the projection onto said normal plane of a normal vector ($\vec{N}$ai, $\vec{N}$bi) which is normal to the workpiece surface at the tracing point.

14. Coordinate measuring machine according to Claim 13, in which the controller provides the control data such that said tracing angle is set for each point by suitably rotating the probe and/or by rotating the workpiece.

15. Coordinate measuring machine according to Claim 12 or 14, in which the controller determines a tracing line (34, 38) for the purpose of calculating the control data between the points defining the line to be traced.

16. Coordinate measuring machine according to Claim 15, in which the controller furthermore calculates tangent vectors ($\vec{T}$ai, $\vec{T}$bi) to the tracing line in order to determine the control data at the points defining the tracing line, and angles of rotation ($\alpha$i, $\beta$i) are determined from the angles ($\gamma$i, $\mu$i) between the tangent vectors projected onto said normal plane.

17. Coordinate measuring machine according to Claims 12 to 14, in which, in order to determine the control data, the controller calculates angles of rotation ($\alpha$i, $\beta$i) from the angles which the points defining the line to be traced enclose with the axis of rotation about which the workpiece is rotated.

18. Coordinate measuring machine according to Claim 12 or 14, in which, in order to determine the control data, the controller calculates angles of rotation from normal vectors ($\vec{N}$ai, $\vec{N}$bi) which specify a direction normal to the workpiece surface in relation to each point defining the line to be traced, the angles of rotation being determined from the angles between the normal vectors projected onto said normal plane.

19. Coordinate measuring machine according to Claims 12 to 18, in which, while taking account of the determined angles of rotation, the controller determines path points (Sai, Sbi) which define the path to be covered by the probe.

20. Coordinate measuring machine according to Claim 19, in which desired positional values (Lai, Lbi) are determined by the controller, on the basis of the path points, for controlling the probe, and desired values of the angles of rotation (L$\alpha$i, L$\beta$i) are determined, on the basis of the associated angles of rotation, for controlling the angle of rotation, these determinations being performed in such a way that the probe does not exceed a fixed maximum path speed and does not exceed a fixed maximum path acceleration, and that the rotary unit does not exceed a fixed maximum angular speed and a fixed maximum angular acceleration.

21. Coordinate measuring machine according to Claims 12 to 20, in which the coordinate measuring machine additionally has a further rotary unit (39) via which the probe is mounted rotatably about an axis of rotation (31), the axis of rotation being orthogonal to all the axes of rotation with said first alignment.

22. Coordinate measuring machine according to Claim 21, in which the control unit determines the control data in such a way that the preferred measurement direction is always at a fixed tracing angle to the normal vectors during the entire measurement cycle.

23. Coordinate measuring machine according to Claims 12 to 22, in which the probe is a touch probe or an optical probe.

## Revendications

1. Procédé de commande d'appareils de mesure de coordonnées suivant des données de consigne avec un palpeur (2, 7, 40) guidé de manière mobile, qui palpe constamment la surface d'une pièce à mesurer (15) en un point de palpation dans une direction de mesure préférée ($\vec{M}$), dans lequel au moins soit le palpeur soit la pièce (15) est de plus guidé en rotation autour d'au moins un axe de rotation (29, 30) selon une première direction, avec les étapes suivantes du procédé :

   - préparation de données géométriques, comprenant au moins des points (Pai, Pbi) sur la surface de la pièce définissant une ligne à palper (34, 38),
   - calcul de données de commande (Lai, L$\alpha$i respectivement Lbi, L$\beta$i) pour la commande du déroulement de la mesure à partir des données géométriques de telle sorte que pour la mesure de la pièce (15, 38), on fait entre autres pivoter la pièce et/ou le palpeur autour de l'axe de rotation.

2. Procédé selon la revendication 1, dans lequel les données de commande sont déterminées de telle sorte que la projection de la direction de mesure préférée ($\vec{M}$) sur un plan normal orthogonal à l'axe de rotation forme avec la projection d'un vecteur normal ($\vec{N}$ai, $\vec{N}$bi), normal à la surface de la pièce au point de palpation sur le plan normal cité, un angle qui englobe largement un angle de palpation défini.

3. Procédé selon la revendication 2, dans lequel l'angle de palpation est réglé pour chaque point par une rotation appropriée du palpeur et/ou par une rotation appropriée de la pièce.

4. Procédé selon les revendications 1 à 3, dans lequel on détermine une ligne de palpation (34, 38) pour le calcul des données de commande entre les points définissant la ligne à palper.

5. Procédé selon la revendication 4, dans lequel, de plus, pour déterminer les données de commande, on détermine les vecteurs tangents ($\vec{T}$ai respectivement $\vec{T}$bi) à la ligne de palpation aux points définissant la ligne de palpation et on détermine l'angle de rotation ($\alpha$i, $\beta$i) à partir des angles ($\gamma$i respectivement $\mu$i) entre les vecteurs tangents projetés sur le plan normal cité.

6. Procédé selon les revendications 1 à 3, dans lequel, pour déterminer les données de commande, on calcule les angles de rotation ($\alpha$i, $\beta$i) à partir des angles qui englobent les points (Pai) définissant la ligne à palper avec l'axe de rotation (29) autour duquel on fait tourner la pièce (15).

7. Procédé selon les revendications 1 à 3, dans lequel, pour déterminer les données de commande, on calcule les angles de rotation ($\alpha$i, $\beta$i) à partir des vecteurs normaux ($\vec{N}$ai, $\vec{N}$bi) qui indiquent pour chaque point définissant la ligne à palper, une direction normale à la surface de la pièce, les angles de rotation étant déterminés à partir des angles entre les vecteurs normaux projetés sur le plan normal cité.

8. Procédé selon les revendications 5 à 7, dans lequel, pour déterminer les données de commande en respectant les angles de rotation déterminés, on détermine des points de trajectoire (Sbi) qui définissent la trajectoire à suivre par le palpeur.

9. Procédé selon la revendication 8, dans lequel, pour déterminer les données de commande, on détermine des valeurs de consigne de position (Lai, Lbi) à partir des points de la trajectoire pour la commande du palpeur et des valeurs de consigne des angles de rotation (L$\alpha$i, L$\beta$i) à partir des angles de rotation associés pour la commande de l'angle de rotation de telle sorte que le palpeur ne dépasse pas une vitesse de trajectoire maximale définie et une accélération de trajectoire maximale définie et que l'unité de rotation ne dépasse pas une accélération angulaire maximale définie et une vitesse angulaire maximale définie.

10. Procédé selon les revendications 1 à 9, dans lequel le palpeur peut pivoter autour d'un deuxième axe de rotation (31) qui est placé orthogonalement à tous les axes de rotation de la première orientation citée et dans lequel les données de commande sont déterminées de telle sorte que la direction de mesure préférée se trouve toujours à un angle de palpation fixe par rapport aux vecteurs normaux pendant tout le déroulement de la mesure.

11. Procédé selon les revendications 1 à 10, dans lequel le palpeur est un palpeur de contact ou un palpeur optique.

12. Appareil de mesure de coordonnées pour la palpation d'une pièce suivant des données de consigne avec

   - un palpeur (2, 7, 40) guidé de manière mobile, qui mesure la surface de la pièce (15, 37) en un point de palpation dans une direction de mesure préférée ($\vec{M}$) pouvant être définie,
   - au moins une unité de rotation (25, 35) permettant de faire pivoter la pièce et/ou le palpeur autour d'un axe de rotation (29, 30) selon une première direction,
   - une commande qui détermine à partir de données géométriques, des données de commande pour la commande du déroulement de la mesure à partir des données géométriques de telle sorte que pour la mesure de la pièce, on fait entre autres pivoter la pièce et/ou le palpeur autour de l'axe de rotation, les données géométriques comprenant les points (Pai, Pbi) sur la surface de la pièce définissant la ligne à palper.

13. Appareil de mesure de coordonnées selon la revendication 12, dans lequel la commande détermine les données de commande (Lai, L$\alpha$i respectivement Lbi, L$\beta$i) de telle sorte que la projection de la direction de mesure préférée ($\vec{M}$) sur un plan normal orthogonal à l'axe de rotation forme avec la projection d'un vecteur normal ($\vec{N}$ai, $\vec{N}$bi), normal à la surface de la pièce au point de palpation sur le plan normal cité, un angle qui englobe largement un angle de palpation défini.

14. Appareil de mesure de coordonnées selon la revendication 13, dans lequel la commande élabore les données de commande de telle sorte que ledit angle de palpation est réglé pour chaque point par une rotation appropriée du palpeur et/ou par une rotation de la pièce.

15. Appareil de mesure de coordonnées selon la revendication 12 ou 14, dans lequel la commande détermine une ligne de palpation (34, 38) pour le calcul des données de commande entre les points définissant la ligne à palper.

16. Appareil de mesure de coordonnées selon la revendication 15, dans lequel, pour déterminer les données de commande, la commande calcule de plus les vecteurs tangents ($\vec{T}$ai, $\vec{T}$bi) à la ligne de palpation aux points définissant la ligne de palpation et on détermine l'angle de rotation ($\alpha$i, $\beta$i) à partir des angles ($\gamma$i, $\mu$i) entre les vecteurs tangents projetés sur le plan normal cité.

17. Appareil de mesure de coordonnées selon les revendications 12 à 14, dans lequel, pour déterminer les données de commande, la commande calcule les angles de rotation ($\alpha$i, $\beta$i) à partir des angles qui englobent les points définissant la ligne à palper avec l'axe de rotation autour duquel on fait tourner la pièce.

18. Appareil de mesure de coordonnées selon la revendication 12 ou 14, dans lequel, pour déterminer les données de commande, la commande calcule les angles de rotation à partir des vecteurs normaux ($\vec{N}$ai, $\vec{N}$bi) qui indiquent, pour chaque point définissant la ligne à palper, une direction normale à la surface de la pièce, les angles de rotation étant déterminés à partir des angles entre les vecteurs normaux projetés sur le plan normal cité.

19. Appareil de mesure de coordonnées selon les revendications 12 à 18, dans lequel, la commande détermine des points de trajectoire (Sai, Sbi) qui définissent la trajectoire à suivre par le palpeur en respectant les angles de rotation déterminés.

20. Appareil de mesure de coordonnées selon la revendication 19, dans lequel la commande détermine des valeurs de consigne de position (Lai, Lbi) à partir des points de la trajectoire pour la commande du palpeur et des valeurs de consigne des angles de rotation (L$\alpha$i, L$\beta$i) à partir des angles de rotation associés pour la commande de l'angle de rotation de telle sorte que le palpeur ne dépasse pas une vitesse de trajectoire maximale définie et une accélération de trajectoire maximale définie et que l'unité de rotation ne dépasse pas une vitesse angulaire maximale définie et une accélération angulaire maximale définie.

21. Appareil de mesure de coordonnées selon les revendications 12 à 20, dans lequel l'appareil de mesure de coordonnées présente en plus une autre unité de rotation (39) permettant le guidage en rotation du palpeur autour d'un axe de rotation (31), l'axe de rotation étant placé orthogonalement à tous les axes de rotation de la première orientation citée.

22. Appareil de mesure de coordonnées selon la revendication 21, dans lequel l'unité de commande détermine les données de commande de telle sorte que la direction de mesure préférée se trouve toujours à un angle de palpation fixe par rapport aux vecteurs normaux pendant tout le déroulement de la mesure.

23. Appareil de mesure de coordonnées selon les revendications 12 à 22, dans lequel le palpeur est un palpeur de contact ou un palpeur optique.

FIG.1

*FIG. 2*

*FIG. 3*

EP 0 866 390 B1

_FIG. 4a_

_FIG. 4b_

FIG.5

# FIG. 6

_FIG. 7a_

_FIG. 7b_